(19) Europäisches Patentamt
European Patent Office
Office européen des brevets

(11) **EP 4 629 333 A1**

(12) **EUROPEAN PATENT APPLICATION**
published in accordance with Art. 153(4) EPC

(43) Date of publication:
**08.10.2025  Bulletin 2025/41**

(21) Application number: **24863241.6**

(22) Date of filing: **06.09.2024**

(51) International Patent Classification (IPC):
*H01M 4/38* (2006.01)       *H01M 10/052* (2010.01)
*H01M 4/62* (2006.01)       *H01M 4/525* (2010.01)
*H01M 4/505* (2010.01)      *H01M 4/58* (2010.01)
*H01M 4/134* (2010.01)

(52) Cooperative Patent Classification (CPC):
**H01M 4/134; H01M 4/38; H01M 4/505;
H01M 4/525; H01M 4/58; H01M 4/62;
H01M 10/052;** Y02E 60/10

(86) International application number:
**PCT/KR2024/013464**

(87) International publication number:
**WO 2025/053662 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023  KR 20230119486
08.09.2023  KR 20230119535
05.09.2024  KR 20240121104**

(71) Applicant: **LG Energy Solution, Ltd.
Seoul 07335 (KR)**

(72) Inventors:
• **PARK, Su Jin**
  **Daejeon 34122 (KR)**
• **MIN, Jiwon**
  **Daejeon 34122 (KR)**
• **LEE, Jaewook**
  **Daejeon 34122 (KR)**
• **KWON, Yohan**
  **Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57)   The present application relates to a lithium secondary battery.

[Figure 1]

EP 4 629 333 A1

**Description**

[Technical Field]

This application claims priority to and the benefit of Korean Patent Application No. 10-2023-0119535 filed in the Korean Intellectual Property Office on September 8, 2023 and Korean Patent Application No. 10-2023-0119486 filed in the Korean Intellectual Property Office on September 8, 2023, the entire contents of which are incorporated herein by reference.

The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming from the positive electrode. As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.

That is, a lithium secondary battery is usually manufactured by using a lithium-intercalated compound, such as $LiCoO_2$ or $LiMn_2O_4$ for the positive electrode, and a non-lithium intercalated material, such as a carbon-based or Si-based material for the negative electrode. During charging, the lithium ions intercalated to the positive electrode migrate to the negative electrode through the electrolyte solution. During discharging, the lithium ions migrate back to the positive electrode from the negative electrode. During charging, lithium migrating from the positive electrode to the negative electrode reacts with the electrolyte solution to form a kind of passivation film, that is, a solid electrolyte interface (SEI), on a surface of the negative electrode. The SEI inhibits transport of electrons required for the reaction of the negative electrode with the electrolyte solution to prevent decomposition of the electrolyte, thereby stabilizing a structure of the negative electrode. On the other hand, formation of SEI is irreversible to cause consumption of lithium ions. That is, the lithium consumed due to the formation of SEI does not return to the positive electrode during the subsequent discharging process, resulting in a reduction in capacity of the battery.

On the other hand, as an effort for improving the performance of the lithium secondary battery, it is needed to develop a technique for accelerating a charging rate. In order to rapidly charge a lithium secondary battery, a migration rate of lithium ions should be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carbon-coated layer on a surface of the negative electrode active material layer to increase conductivity.

However, it is difficult to implement a high capacity with a negative electrode having such a thin film negative electrode active material layer. In addition, it is difficult to implement rapid charging in a negative electrode having a high capacity. Further, when using a silicon-based negative electrode, a content of Si in the negative electrode is increased for increase in energy density, and accordingly, in order to reduce the efficiency of the positive electrode of High Ni, which is a positive electrode material, an excessive amount of sacrificial positive electrode material is applied to be in balance with the negative electrode. However, in this case, problems of an increase in amount of gas generation in the battery cell itself and the resulting stability are caused.

In particular, in a negative electrode using a silicon-based active material, the intercalation and deintercalation of Li within the particles is uneven during the charge/discharge process, which accelerates degradation of the silicon-based active material itself in the Li-rich phase, leading to increased cell swelling and performance degradation. In addition, pulverization due to volume expansion during the charge/discharge process cause new particle surfaces to be continuously exposed as the cycle progresses. Therefore, an SEI layer including a LiF inorganic layer on the surface is required, and an electrolyte solution with an excessive amount of FEC is used for LiF formation. However, the electrolyte solution with an excessive amount of FEC leads to increased gas generation at high temperatures, which is detrimental to high-temperature service life and thus causes safety problems.

Therefore, research is needed to maintain a cell resistance, to reduce cell swelling, and to increase service life characteristics while using a negative electrode including a silicon-based active material for high capacity.

Prior Art Document

(Patent Literature 1) Japanese Patent Application Publication No. 2009-080971

[Detailed Description of the Invention]

[Technical Problem]

As a result of research on the aforementioned problems, it was found that when a silicon-based negative electrode is used to secure capacity characteristics and rapid charging performance, and at the same time the crystal grain size and average particle diameter of a silicon-based active material are controlled within certain ranges, FEC consumption in the electrolyte can be reduced, gas generation at high-temperatures can be controlled, and the reaction in the negative electrode can be uniformly controlled, leading to improved cell swelling and service life characteristics.

That is, when the crystal grain size and average particle diameter of the silicon-based active material are controlled within certain ranges, Li ions can be uniformly diffused, resulting in a lithium secondary battery with optimized cell swelling and cell breathing ranges.

Accordingly, the present application relates to a lithium secondary battery including a silicon-based negative electrode and having cell swelling and cell breathing values controlled to specific ranges.

[Technical Solution]

An exemplary embodiment of the present specification provides a lithium secondary battery including: a positive electrode; a silicon-based negative electrode; a separator provided between the positive electrode and the negative electrode; and an electrolyte, wherein the silicon-based negative electrode includes a negative electrode current collector layer; and a negative electrode active material layer provided on one surface or both surfaces of the negative electrode current collector layer, and the lithium secondary battery satisfies Formulas 1 and 2 below.

$$[\text{Formula 1}]$$

$$X1 \leq 20\%$$

$$[\text{Formula 2}]$$

$$Y1 \leq 10\%$$

in Formulas 1 and 2 above, X1 refers to a cell swelling value, which indicates a rate of change in a thickness of the negative electrode active material layer of the silicon-based negative electrode in a fully charged state after the lithium secondary battery after activation undergoes 300 charge/discharge cycles within a range of 4.2 V-3.2 V, and

Y1 refers to a cell breathing value, which indicates a rate of change in the thickness of the negative electrode active material layer of the silicon-based negative electrode when the lithium secondary battery after activation is charged once within the range of 4.2 V-3.2 V.

[Advantageous Effects]

The lithium secondary battery according to the present application can enable a battery with high capacity and high energy density to be ensured by using the silicon-based negative electrode, and can also ensure rapid charging performance by using the silicon-based active material with excellent capacity characteristics to form a negative electrode thickness at a level of a thin film.

In particular, the lithium secondary battery according to the present application addresses the problems of cell swelling and cell breathing due to charge and discharge, which are problems of silicon-based negative electrodes in the related art. That is, by focusing on the type of silicon-based active material included in the silicon-based negative electrode and changing it to an active material with smaller crystal grains of silicon-based active material, it is possible to apply a silicon-based active material with smaller crystal grains even in the Li-rich phase in relation to the positive electrode, leading to uniform reactions. Consequently, the ranges of cell swelling and cell breathing can be optimized, resulting in a lithium secondary battery with improved service life characteristics, as well as high capacity and high energy density.

Unlike graphite-based negative electrodes in the related art, the silicon-based negative electrode has a large capacity and therefore a very large volume expansion. This has limited the use of the entire negative electrode capacity. In addition, the cell is designed in a way that only a portion is used by controlling the NP of the cell. However, as described above, in the present invention, the cell swelling and cell breathing values are optimized by focusing on the type of silicon-based active material and changing the composition of the negative electrode active material layer.

That is, by including a silicon-based active material with a crystal grain size of 100 nm or less and an average particle diameter (D50) of 1 $\mu$m to 7 $\mu$m, that is, when a silicon-based active material whose crystal grains fall within the above range is used, the consumption of FEC in the electrolyte can be reduced. In the case of a silicon-based negative electrode battery, sudden death occurs along with the consumption of FEC, and the service life performance deteriorates rapidly. However, by applying the silicon-based active material having the above characteristics, the consumption of FEC is reduced, and the cell swelling and cell breathing values described above are optimized.

[Brief Description of Drawings]

FIG. 1 shows a lithium secondary battery according to an exemplary embodiment of the present application.
FIG. 2 is a view showing a method of calculating a crystal grain size.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including: a positive electrode; a silicon-based negative electrode; a separator provided between the positive electrode and the negative electrode; and an electrolyte, wherein the silicon-based negative electrode includes a negative electrode current collector layer; and a negative electrode active material layer provided on one surface or both surfaces of the negative electrode current collector layer, and the lithium secondary battery satisfies Formulas 1 and 2 above.

By focusing on the type of silicon-based active material included in the silicon-based negative electrode and changing it to an active material with smaller crystal grains of silicon-based active material, it is possible to apply a silicon-based active material with smaller crystal grains even in the Li-rich phase in relation to the positive electrode, leading to uniform reactions. Consequently, the ranges of cell swelling and cell breathing can be optimized, resulting in a lithium secondary battery with improved service life characteristics, as well as high capacity and high energy density.

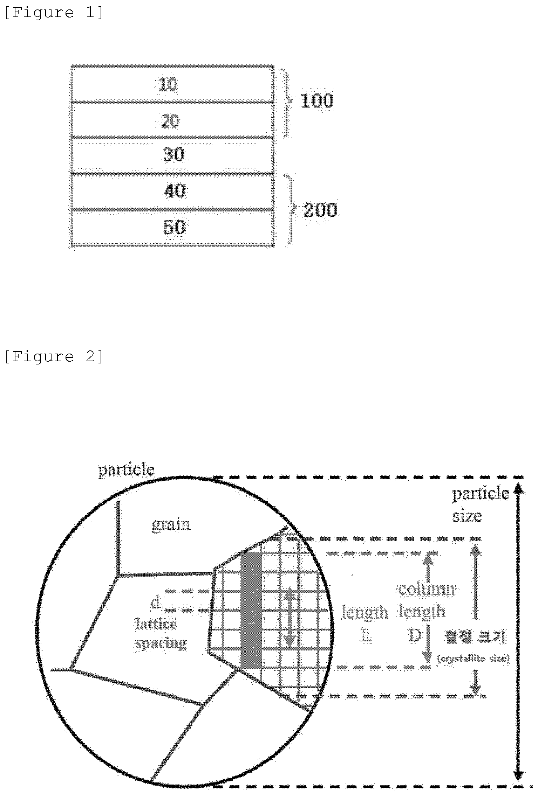

FIG. 1 is a view showing a stack structure of a lithium secondary battery according to an exemplary embodiment of the present application. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

In the present application, X1 refers to a cell swelling value, which indicates a rate of change in a thickness of the negative electrode active material layer of the silicon-based negative electrode in a fully charged state after the lithium secondary battery after activation undergoes 300 charge/discharge cycles within a range of 4.2 V-3.2 V. That is, cell swelling indicates a rate of change in the thickness of the negative electrode after a certain cycle, based on the initial lithium secondary battery (after activation). In the case of graphite-based negative electrodes of the related art, cell swelling due to charge and discharge was not a major problem, but in the case of silicon-based negative electrodes, volume expansion due to charge and discharge caused problems in relation to service life characteristics. Regarding this, when the range of Formula 1 according to the present application is satisfied, service life characteristics can be secured.

In an exemplary embodiment of the present application, Y1 refers to a cell breathing value, which indicates a rate of change in the thickness of the negative electrode active material layer of the silicon-based negative electrode when the lithium secondary battery after activation is charged once within the range of 4.2 V-3.2 V. That is, the cell breathing value may refer to a rate of change in the thickness of the negative electrode active material layer during one cycle of operation of a lithium secondary battery.

Ultimately, the cell swelling may refer to the rate of change in thickness after a cycle has been performed, and the cell breathing may refer to the rate of change in thickness after one cycle has been performed. The cell breathing value is a value reflected in the design of the cell and is an important factor in defining the shipping thickness, and the cell swelling is a factor representing deterioration of the cell and is a factor related to the service life.

In this case, the description "lithium secondary battery after activation" refers to a lithium secondary battery in an initial charge state or initial discharge state after one or two charges and discharges, which are activation processes generally included, and corresponds to a lithium secondary battery in an initial state.

In an exemplary embodiment of the present application, Formula 1 above can satisfy $X1 \leq 20\%$, $X1 \leq 17\%$, or $X1 \leq 15\%$, and can satisfy $1\% \leq X1$, $3\% \leq X1$, or $5\% \leq X1$.

In an exemplary embodiment of the present application, Formula 2 above can satisfy $Y1 \leq 10\%$, $Y1 \leq 8\%$, or $Y1 \leq 7\%$, and can satisfy $1\% \leq Y1$, or $3\% \leq Y1$.

In an exemplary embodiment of the present application, there is provided the lithium secondary battery in which Formula 1 above satisfies $5\% \leq X1 \leq 15\%$, and Formula 2 above satisfies $3\% \leq Y1 \leq 7\%$.

The lithium secondary battery according to the present application has a feature of Formulas 1 and 2 above within the above ranges simultaneously. That is, in order to prevent performance degradation, the ranges of Formulas 1 and 2 above must be satisfied, and this also leads to the improvement of the service life characteristics of the lithium secondary battery.

Below, the positive electrode, negative electrode, electrolyte, and separator included in the lithium secondary battery will be described, respectively.

According to the present application, the silicon-based negative electrode may include a negative electrode current collector layer, and a negative electrode active material layer provided on one surface or both surfaces of the negative electrode current collector layer.

The negative electrode current collector layer generally has a thickness of 1 to 100 $\mu$m. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, the negative electrode active material layer may include a negative electrode active material layer composition, the negative electrode active material layer composition may include a silicon-based active material, and the silicon-based active material may include one or more selected from the group consisting of $SiO_x$ (x=0), $SiO_x$ (0 < x < 2), SiC, and a Si alloy.

In an exemplary embodiment of the present application, the negative electrode active material layer composition may include one or more selected from the group consisting of a negative electrode conductive material and a negative electrode binder.

In an exemplary embodiment of the present application, the negative electrode active material layer may include a negative electrode active material layer composition, and the negative electrode active material layer composition may include one or more selected from the group consisting of a silicon-based active material, a negative electrode conductive material, and a negative electrode binder.

In an exemplary embodiment of the present application, the negative electrode active material layer may include a negative electrode active material layer composition, and the negative electrode active material layer composition may include a silicon-based active material; a negative electrode conductive material; and a negative electrode binder.

In an exemplary embodiment of the present application, the silicon-based active material may include one or more selected from the group consisting of $SiO_x$ (x=0), $SiO_x$ (0 < x < 2), SiC, and a Si alloy.

In an exemplary embodiment of the present application, the silicon-based active material may include one or more selected from the group consisting of $SiO_x$ (x=0), $SiO_x$ (0 < x < 2) and a metal impurity, and may include 70 parts by weight or more of $SiO_x$ (x=0) based on 100 parts by weight of the silicon-based active material.

In another exemplary embodiment, SiOx (x = 0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, the silicon-based active material may include a metal impurity, and in this case, the impurity is metal that may be generally included in the silicon-based active material, and specifically, may be included in an amount of 0.1 part by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range.

According to an exemplary embodiment of the present application, there is provided the lithium secondary battery in which a crystal grain size of the silicon-based active material is 100 nm or less.

In an exemplary embodiment of the present application, a crystal grain size of $SiO_x$ (x=0) may be 100 nm or less.

In another exemplary embodiment, the crystal grain size of the silicon-based active material may be 100 nm or less, preferably 90 nm or less, more preferably 85 nm or less, still more preferably 80 nm or less, specifically 75 nm or less, and more specifically 70 nm or less. The crystal grain size of the silicon-based active material may fall within a range of 10 nm or greater, preferably 15 nm or greater.

The silicon-based active material has the crystal grain size within the range, leading to widely distributed crystal grain boundaries. As a result, the lithium ions can be uniformly intercalated during intercalating of lithium ions, thereby reducing the stress applied during intercalating of lithium ions into the silicon particles, and accordingly, mitigating particle breakage. As a result, characteristics capable of improving the service life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, particle breakage.

In particular, by controlling the crystal grain size of the silicon-based active material, the reactions at the negative electrode can be made uniform during operation of the lithium secondary battery, and thus, the ranges of Formulas 1 and 2 above can be satisfied.

That is, there are methods for controlling volume expansion, such as increasing an amount of binder or reducing a cell operating range; however, the resistance is increased when the amount of binder is increased, the ED (energy density) is not secured when the cell operating range is reduced. That is, it is difficult to improve the cell design in a favorable direction unless the intrinsic characteristics are overcome. However, it was found that the range of Formulas 1 and 2 above can be optimized when the crystal grain size of the silicon-based active material is controlled as described above.

In the present application, the crystal grain refers to a crystal particle in a metal or material, which is a collection of microscopically irregular shapes, and the crystal grain size may mean a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size may be calculated as a value of full width at half maximum (FWHM) through XRD analysis. Specifically, it can be seen in FIG. 2 how to calculate the crystal grain size. In FIG. 2, the remaining values except for L are measured through XRD analysis of the silicon-based active material, and the crystal grain size can be measured through the Debey-Scherrer Formula, which shows that the FWHM and the crystal grain size are inversely proportional. The Debey-Scherrer Formula is as shown in Formula 1-1 below.

$$[\text{Formula } 1\text{-}1]$$

$$\text{FWHM} = K\lambda/L\cos\theta$$

In Formula 1-1 above, L is a crystal grain size, K is a constant, $\theta$ is a Bragg angle, and $\lambda$ is a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put on (laid across) the line are excluded. When the number of lines is P and the magnification is V, the average particle diameter can be calculated by Formula 1-2 below.

$$[\text{Formula } 1\text{-}2]$$

$$Dm = (L*P*10^3)/(zV) \quad (um)$$

In addition, the circle method is a method in which a circle with a predetermined diameter is drawn on a micrograph of a target particle, and then an average area of crystal grains is calculated by the number of crystal grains within the circle and the number of crystal grains laid across the boundary line, and the average area can be calculated by the following Formula 1-3.

$$[\text{Formula } 1\text{-}3]$$

$$Fm = (Fk * 10^6) / ((0.67n + z) \ V^2) \quad (um^2)$$

In Formula 1-3, Fm is an average particle area, Fk is a measurement area on the photograph, z is the number of particles within a circle, n is the number of particles laid across the circle, and V is a magnification of a microscope.

The average particle diameter (D50) of the silicon-based active material of the present invention may be 1 $\mu$m or greater and 7 $\mu$m or less, and specifically, 2 $\mu$m or greater and 5 $\mu$m or less. If the average particle diameter falls below the range, the specific surface area of the particle increases excessively, causing the viscosity of the negative electrode slurry to increase excessively. Consequently, the particles constituting the negative electrode slurry are not smoothly dispersed. In addition, if the silicon-based active material is excessively small, a contact area between the silicon-based particles and a conductive material is reduced due to the composite composed of the conductive material and the binder in the negative electrode slurry, so that a disconnection possibility of the conductive network increases, thereby lowering the capacity retention rate. On the other hand, if the average particle diameter exceeds the range, excessively large silicon-based particles are present, resulting in an uneven surface of the negative electrode, which in turn causes a non-uniform current density during charging and discharging. Additionally, if the silicon-based particles are excessively large, the phase stability of the negative electrode slurry becomes unstable, resulting in degraded processability. As a result, the capacity retention rate of the battery decreases.

As described above, the silicon-based active material has a feature that the crystal grain size and the average particle diameter (D50) fall within the above ranges simultaneously. By satisfying the above ranges, the consumption of FEC in the electrolyte solution can be reduced, thereby reducing the initial FEC content to 10 parts by weight or less.

In an exemplary embodiment of the present application, the silicon-based active material generally has a characteristic BET surface area. The BET surface area of the silicon-based active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET surface area is measured in accordance with DIN 66131 (using nitrogen).

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a spherical or amorphous shape.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1-1 below, in which A is an area and P is a boundary line.

$$[\text{Formula 1-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the negative electrode active material layer composition may include a negative electrode conductive material and a negative electrode binder. That is, the negative electrode conductive material plays a role in securing a conductive path, and the negative electrode binder plays a role in holding the negative electrode conductive material during charging and discharging.

In an exemplary embodiment of the present application, the negative electrode conductive material may include one or more selected from the group consisting of a point-like conductive material, a planar conductive material, and a linear conductive material.

In an exemplary embodiment of the present application, there is provided the lithium secondary battery in which the negative electrode conductive material includes at least a linear conductive material.

In an exemplary embodiment of the present application, the point-like conductive material refers to a conductive material that may be used for improving conductivity of the negative electrode, forms conductivity without causing a chemical change, and has a circular or point shape. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a particle diameter of the point-like conductive material may be 10 to 100 nm, preferably 20 to 90 nm, and more preferably 40 to 60 nm.

In an exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 4 to 5 $\mu$m. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or greater and 1.5 $\mu$m or less, a D50 of 4.0 $\mu$m or greater and 5.0 $\mu$m or less, and a D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected by dispersion to some extent in the electrode performance, so that a planar conductive material with a low specific surface area, which does not cause a problem in dispersion, is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may fall within a range of 50 $m^2$/g or greater and 500 $m^2$/g or less, preferably 80 $m^2$/g or greater and 300 $m^2$/g or less, and more preferably 100 $m^2$/g or greater and 250 $m^2$/g or less.

In another exemplary embodiment, the planar conductive material is a planar conductive material with a low specific surface area, and the BET specific surface area may fall within a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material, and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 to 100 $\mu$m, and preferably 1 to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present application, the negative electrode conductive material may include a planar conductive material and a linear conductive material, and a ratio of the planar conductive material to the linear conductive material may satisfy 1:0.001 to 1:0.3.

In an exemplary embodiment of the present application, as the negative electrode conductive material includes the planar conductive material and the linear conductive material and the composition and ratio described above are satisfied, respectively, the service life characteristics of an existing lithium secondary battery are not significantly affected, and the number of points where the battery can be charged and discharged increases, so that output characteristics are excellent at a high Crate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a planar or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

In the present application, the negative electrode binder may include an aqueous binder.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, or 8 parts by weight or more based on 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the silicon-based negative electrode may be formed by coating a negative electrode slurry including the negative electrode active material layer composition on one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

In an exemplary embodiment of the present application, a thickness of the negative electrode current collector layer may be 1 $\mu$m or greater and 100 $\mu$m or less, and a thickness of the negative electrode active material layer may be 20 $\mu$m or greater and 500 $\mu$m or less.

In an exemplary embodiment of the present application, the positive electrode includes a positive electrode current collector layer and a positive electrode active material layer provided on one surface or both surfaces of the positive electrode current collector layer.

In an exemplary embodiment of the present application, the positive electrode active material layer may include a positive electrode active material layer composition, and the positive electrode active material layer composition may include one or more selected from the group consisting of a positive electrode active material, a positive electrode conductive material, and a positive electrode binder.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 $\mu$m, and a surface of the positive electrode current collector layer may be formed with microscopic irregularities to enhance adhesive force with the positive electrode active material. For example, the positive electrode current collector may be used in various forms such as a film, a sheet, a foil, a net, a porous body, a foamed body, and a non-woven fabric body.

In an exemplary embodiment of the present application, there is provided the lithium secondary battery in which a thickness of the positive electrode current collector layer is 1 $\mu$m or greater and 100 $\mu$m or less and a thickness of the positive electrode active material layer is 20 $\mu$m or greater and 500 $\mu$m or less.

The positive electrode active material may be a positive electrode active material that is typically used. Specifically, the positive electrode active material may include one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$ (M: transition metal, x+y=1). In this case, the positive electrode active material is not limited thereto.

Specifically, for the positive electrode active material, NCM or NCMA that is commonly used may be used.

In general, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \le c1 \le 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \le c2 \le 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \le c3 \le 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material may include a lithium composite transition metal compound including nickel (Ni), cobalt (Co), and manganese (Mn), the lithium composite transition metal compound may include single particles or secondary particles, and an average particle diameter (D50) of the single particles may be 1 μm or greater.

For example, the average particle diameter (D50) of the single particles may be 1 μm or greater and 12 μm or less, 1 μm or greater and 8 μm or less, 1 μm or greater and 6 μm or less, greater than 1 μm and 12 μm or less, greater than 1 μm and 8 μm or less, or greater than 1 μm and 6 μm or less.

Even when the single particles are formed with a small average particle diameter (D50) of 1 μm or greater and 12 μm or less, the particle strength may be excellent. For example, the single particle may have a particle strength of 100 to 300 MPa when roll-pressing with a force of 650 kgf/cm². Accordingly, even when the single particles are roll-pressed with a strong force of 650 kgf/cm², the increase in micro-particles in an electrode due to particle breakage is alleviated, which improves the service life characteristics of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally the single particles can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle means a form formed by agglomeration of primary particles, and can be distinguished from the concept of a single particle including one primary particle, one single particle and a quasi-single particle form, which is an agglomerate of 30 or less primary particles.

The secondary particle may have a particle diameter (D50) of 1 to 20 μm, 2 to 17 μm, and preferably 3 to 15 μm. The specific surface area (BET) of the secondary particles may be 0.05 m²/g to 10 m²/g, preferably 0.1 m²/g to 1 m²/ g, and more preferably 0.3 m²/g to 0.8 m²/g.

In a further exemplary embodiment of the present application, the secondary particle is an agglomerate of primary particles, and the average particle diameter (D50) of the primary particles is 0.5 to 3 μm. Specifically, the secondary particle may be in an agglomerate form of hundreds of primary particles, and the average particle diameter (D50) of the primary particles may be 0.6 to 2.8 μm, 0.8 to 2.5 μm, or 0.8 to 1.5 μm.

When the average particle diameter (D50) of the primary particles falls within the above range, a single-particle positive electrode active material having excellent electrochemical properties can be formed. If the average particle diameter (D50) of the primary particles is too small, the number of agglomerates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase in micro-particles in an electrode due to particle breakage is alleviated, which can improve the service life characteristics of the battery.

In an exemplary embodiment of the present application, the average particle diameter (D50) of the single particles is 1 to 18 $\mu$m smaller than the average particle diameter (D50) of the secondary particles.

For example, the average particle diameter (D50) of the single particles may be 1 to 16 $\mu$m smaller, 1.5 to 15 $\mu$m smaller, or 2 to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, which improves the service life characteristics and energy density of the battery.

According to a further exemplary embodiment of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase in micro-particles in an electrode due to particle breakage during the roll pressing after fabrication of an electrode is alleviated, which can improve the service life characteristics of the battery.

In the exemplary embodiment of the present application, the lithium composite transition metal compound may further include secondary particles, and the secondary particles may be included in an amount of 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In the present application, examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

The electrolyte according to the present application may include FEC in an amount of 10 parts by weight or less based on 100 parts by weight of non-aqueous organic solvent.

In another exemplary embodiment, the electrolyte may include FEC in an amount of 10 parts by weight or less, preferably 9 parts by weight or less, and more preferably 8 parts by weight or less, and 3 parts by weight or more or 4 parts by weight or more based on 100 parts by weight of the non-aqueous organic solvent.

In a negative electrode using a silicon-based active material, pulverization due to volume expansion during the charge/discharge process causes new particle surfaces to be continuously exposed as the cycle progresses. Therefore, an SEI layer including a LiF inorganic layer on the surface is required, and an electrolyte solution having FEC in an amount of 10 parts by weight or more is used for LiF formation. However, the electrolyte solution with an excessive amount of FEC leads to increased gas generation at high temperatures, which is detrimental to high-temperature service life and thus causes safety problems. Regarding this, in the case of the lithium secondary battery according to the present application, the silicon-based active material having the characteristics described above is applied to reduce the consumption of FEC, and thus, even if FEC is included within the range described above, there is no problem in operation. Accordingly, the amount of gas generation at high temperatures is reduced to secure service life characteristics, and the ranges of Formulas 1 and 2 described above can be satisfied.

In an exemplary embodiment of the present application, there is provided the lithium secondary battery in which FEC is included in an amount of 10 parts by weight or less based on 100 parts by weight of a non-aqueous organic solvent included in the electrolyte, and after the lithium secondary battery after activation undergoes 300 charge/discharge cycles within a range of 4.2 V-3.2 V, FEC is included in an amount of 5 parts by weight or more based on 100 parts by weight of the non-aqueous organic solvent included in the electrolyte.

In this case, the lithium secondary battery after the activation is the same as the description described above.

The voltage and current of the charge and discharge may refer to general voltage and current used in the art.

That is, when the aforementioned silicon-based active material is applied, the consumption of FEC can be reduced due to the properties of the silicon-based active material, and even if the initial FEC content is within the above range, the FEC in the lithium secondary battery that has undergone the aforementioned conditions remains within a certain range, so that there is no problem in operation, and the ranges of Formulas 1 and 2 are satisfied to secure the service life characteristics.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**Preparation of Negative Electrode**

A negative electrode active material layer composition was prepared using Si (average particle diameter (D50): 5 $\mu$m, crystal grain size: 40 nm) as a silicon-based active material, a first conductive material, a second conductive material, and polyacrylamide as a binder at a weight ratio of 80:9.6:0.4:10. A negative electrode slurry was prepared by adding to the composition distilled water as a solvent for formation of a negative electrode slurry (solid concentration: 28% by weight).

The first conductive material was plate-like graphite (specific surface area: 17 $m^2$/g, average particle diameter (D50): 3.5 $\mu$m), and the second conductive material was carbon nanotubes.

As a mixing method, the first conductive material, the second conductive material, the binder, and water were dispersed at 2500 rpm for 30 minutes by using a homo mixer, the silicon-based active material was added to the dispersion, and the resultant mixture was dispersed at 2500 rpm for 30 minutes to prepare a negative electrode slurry.

The negative electrode slurry was coated on both surfaces of a copper current collector (thickness: 15 $\mu$m) serving as a negative electrode current collector with a loading amount of 3.00 mg/ $cm^2$, which was then roll-pressed and dried in a vacuum oven at 130°C for 10 hours to form a negative electrode active material layer (thickness: 23 $\mu$m).

**Preparation of Positive Electrode**

A positive electrode slurry (solid concentration: 78 wt%) was prepared by adding $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

Aluminum current collector as the positive electrode current collector (thickness: The positive electrode slurry was coated onto both surfaces of an aluminum current collector (thickness: 12 $\mu$m) serving as a positive electrode current collector with a loading amount of 537 mg/25 $cm^2$, which was then roll-pressed and dried in a vacuum oven at 130°C for 10 hours to form a positive electrode active material layer (thickness: 65 $\mu$m), resulting in preparation of a positive electrode (thickness of positive electrode: 77 $\mu$m, porosity: 26%).

A lithium secondary battery was manufactured by interposing a polyethylene separator between the positive electrode and the negative electrode of the Examples and the Comparative Examples and injecting an electrolyte.

In this case, in the electrolyte, as a non-aqueous organic solvent, FEC and DMC were mixed at a weight ratio of 10:90, and 1M FEC:DMC (10:90) $LiPF_6$ solution was used to prepare a lithium secondary battery.

A lithium secondary battery was prepared in the same manner as described above, except that the lithium secondary battery was prepared as shown in Table 1 below.

[Table 1]

| | Silicon-based active material average particle diameter (μm) | Silicon-based active material crystal grain size (nm) | Electrolyte | Formula 1 | Formula 2 |
|---|---|---|---|---|---|
| Example 1 | 5 | 40 | FEC:DMC (10:90) | 8.6 | 3.2 |
| Example 2 | 5 | 50 | FEC:DMC (10:90) | 9.3 | 3.8 |
| Example 3 | 5 | 60 | FEC:DMC (10:90) | 10.2 | 4.2 |
| Example 4 | 5 | 70 | FEC:DMC (10:90) | 11.3 | 5.2 |
| Example 5 | 5 | 40 | FEC:DMC (5:95) | 15 | 3.2 |
| Comparative Example 1 | 5 | 100 | FEC:DMC (10: 90) | 23 | 12.2 |
| Comparative Example 2 | 5 | 150 | FEC:DMC (10: 90) | 26 | 13.1 |
| Comparative Example 3 | 5 | 200 | FEC:DMC (10:90) | 29 | 15 |
| Comparative Example 4 | 10 | 200 | FEC:DMC (10: 90) | 44 | 15 |
| Comparative Example 5 | 0.5 | 40 | FEC:DMC (10: 90) | 50 | 19 |
| Comparative Example 6 | 10 | 40 | FEC:DMC (10: 90) | 27 | 3.5 |
| Comparative Example 7 | 5 | 40 | DMC | 77 | 10 |

In Table 1 above, Formula 1 relates to a cell swelling evaluation. The service life evaluation was performed on lithium secondary batteries including the negative electrodes prepared in the Examples and Comparative Examples using an electrochemical charging and discharging device, and the rate of change in thickness of the negative electrode active material layer of the silicon-based negative electrode was measured in the initial state (after activation) and in the fully charged state after 300 cycles.

Formula 2 relates to a cell breathing evaluation. The rate of change in thickness of the negative electrode active material layer was measured in the charged state compared to after activation when the lithium secondary batteries including the negative electrodes prepared in the Examples and Comparative Examples were charged to 4.2 V at 0.33 C after the activation process.

As can be seen in Table 1 above, when the content of FEC decreases, the LiF layer is less formed, and accordingly, the value of cell swelling may increase as the cycle progresses, which was confirmed through comparison between Example 1 and Example 5.

As the crystal grain size of the silicon-based active material increases, the cell breathing value increases, and as the cycle progresses, the degree of the increase is accumulated and eventually cell swelling may become a problem, which was confirmed through Comparative Examples 1 to 4.

In addition, when the average particle diameter of the silicon-based active material increases, cell degradation occurs due to pulverization as the cycle progresses, and when the average particle diameter is too small, side reactions accumulate, resulting in increased cell swelling, which was confirmed through Comparative Examples 5 and 6.

Finally, it was confirmed through Comparative Example 7 that when the electrolyte not including FEC was used, the LiF layer was not formed smoothly, leading to a rapid deterioration in the lithium secondary battery.

**Evaluation of Service Life Performance at Room Temperatures**

For the lithium secondary batteries including the negative electrodes prepared in the Examples and Comparative Examples, the service life and capacity retention rate were evaluated at room temperatures using an electrochemical charging and discharging device. The secondary batteries were subjected to a cycle test at 4.2-3.2V 1C/0.5C, and the number of cycles at which the sudden drop occurred was measured and are shown in Table 2 below.

[Table 2]

| | N (times, at the time when sudden drop occurred) |
|---|---|
| Example 1 | 620 |
| Example 2 | 611 |

(continued)

|  | N (times, at the time when sudden drop occurred) |
|---|---|
| Example 3 | 598 |
| Example 4 | 587 |
| Example 5 | 589 |
| Comparative Example 1 | 563 |
| Comparative Example 2 | 552 |
| Comparative Example 3 | 550 |
| Comparative Example 4 | 522 |
| Comparative Example 5 | 490 |
| Comparative Example 6 | 540 |
| Comparative Example 7 | 250 |

## Evaluation of Service Life Performance at High Temperatures

For the lithium secondary batteries including the negative electrodes prepared in the Examples and Comparative Examples and the electrolyte, the service life and capacity retention rate were evaluated at 45°C using an electrochemical charging and discharging device. The secondary batteries were subjected to a cycle test at 4.2-3.2V 1C/0.5C, and the number of cycles at which the sudden drop occurred was measured and are shown in Table 3 below.

[Table 3]

|  | N (times, at the time when sudden drop occurred) |
|---|---|
| Example 1 | 607 |
| Example 2 | 601 |
| Example 3 | 587 |
| Example 4 | 575 |
| Example 5 | 596 |
| Comparative Example 1 | 550 |
| Comparative Example 2 | 541 |
| Comparative Example 3 | 523 |
| Comparative Example 4 | 501 |
| Comparative Example 5 | 475 |
| Comparative Example 6 | 537 |
| Comparative Example 7 | 250 |

As can be seen in Tables 1 to 3 above, it was confirmed that by focusing on the type of silicon-based active material included in the silicon-based negative electrode and changing it to an active material with smaller crystal grains of silicon-based active material, it is possible to apply a silicon-based active material with smaller crystal grains even in the Li-rich phase in relation to the positive electrode, leading to uniform reactions, and consequently, optimizing the ranges of cell swelling and cell breathing, resulting in a lithium secondary battery with improved service life characteristics, as well as high capacity and high energy density.

Unlike graphite-based negative electrodes in the related art, the silicon-based negative electrode has a large capacity and therefore a very large volume expansion. This has limited the use of the entire negative electrode capacity. In addition, the cell is designed in a way that only a portion is used by controlling the NP of the cell. However, as described above, the main object of the present invention is to optimize the cell swelling and cell breathing values by focusing on the type of silicon-based active material and changing the composition of the negative electrode active material layer.

**EP 4 629 333 A1**

**Claims**

1. A lithium secondary battery comprising:

   a positive electrode;
   a silicon-based negative electrode;
   a separator provided between the positive electrode and the negative electrode; and
   an electrolyte,
   wherein the silicon-based negative electrode comprises a negative electrode current collector layer, and a negative electrode active material layer provided on one surface or both surfaces of the negative electrode current collector layer, and
   wherein the lithium secondary battery satisfies Formulas 1 and 2.

$$[Formula\ 1]$$

$$X1 \leq 20\%$$

$$[Formula\ 2]$$

$$Y1 \leq 10\%$$

   in Formulas 1 and 2,
   X1 refers to a cell swelling value, which indicates a rate of change in a thickness of the negative electrode active material layer of the silicon-based negative electrode in a fully charged state after the lithium secondary battery after activation undergoes 300 charge/discharge cycles within a range of 4.2 V-3.2 V, and
   Y1 refers to a cell breathing value, which indicates a rate of change in the thickness of the negative electrode active material layer of the silicon-based negative electrode when the lithium secondary battery after activation is charged once within the range of 4.2 V-3.2 V.

2. The lithium secondary battery of claim 1, wherein Formula 1 is $5\% \leq X1 \leq 15\%$, and Formula 2 is $3\% \leq Y1 \leq 7\%$.

3. The lithium secondary battery of claim 1, wherein FEC is included in an amount of 10 parts by weight or less based on 100 parts by weight of a non-aqueous organic solvent included in the electrolyte, and
   wherein after the lithium secondary battery after activation is subjected to 300 charge/discharge cycles within a range of 4.2 V-3.2 V, FEC is included in an amount of 5 parts by weight or more based on 100 parts by weight of the non-aqueous organic solvent included in the electrolyte.

4. The lithium secondary battery of claim 1, wherein the negative electrode active material layer comprises a negative electrode active material layer composition,

   wherein the negative electrode active material layer composition comprises a silicon-based active material, and
   wherein the silicon-based active material comprises one or more selected from the group consisting of $SiO_x$ (x=0), $SiO_x$ (0 < x < 2), SiC, and a Si alloy.

5. The lithium secondary battery of claim 4, wherein the silicon-based active material comprises one or more selected from the group consisting of $SiO_x$ (x=0), $SiO_x$ (0 < x < 2), and a metal impurity, and comprises 70 parts by weight or more of $SiO_x$ (x=0) based on 100 parts by weight of the silicon-based active material.

6. The lithium secondary battery of claim 4, wherein the silicon-based active material has a crystal grain size of 100 nm or less.

7. The lithium secondary battery of claim 4, wherein the silicon-based active material has an average particle diameter (D50) of 1 $\mu$m or greater and 7 $\mu$m or less.

8. The lithium secondary battery of claim 4, wherein the silicon-based active material is included in an amount of 60 parts by weight or more based on 100 parts by weight of the negative electrode active material layer composition.

9.  The lithium secondary battery of claim 4, wherein the negative electrode active material layer composition comprises one or more selected from the group consisting of a negative electrode conductive material and a negative electrode binder, and
    wherein the negative electrode conductive material comprises at least a linear conductive material.

10. The lithium secondary battery of claim 9, wherein the negative electrode binder comprises an aqueous binder.

11. The lithium secondary battery of claim 1, wherein the positive electrode comprises a positive electrode current collector layer and a positive electrode active material layer provided on one surface or both surfaces of the positive electrode current collector layer,

    wherein the positive electrode active material layer comprises a positive electrode active material layer composition,
    wherein the positive electrode active material layer composition comprises a positive electrode active material, and
    wherein the positive electrode active material comprises one or more selected from the group consisting of $LiNi_xCo_yMn_zO_2$ (x+y+z=1) ; $LiNi_aCo_bMn_cAl_dO_2$ (a+b+c+d=1) ; $LiMn_2O_4$; $LiNi_{0.5}Mn_{1.5}O_2$; and $LiM_xFe_yPO_4$ (M: transition metal, x+y=1).

12. The lithium secondary battery of claim 1, wherein a thickness of the negative electrode current collector layer is 1 $\mu$m or greater and 100 $\mu$m or less, and
    wherein a thickness of the negative electrode active material layer is 20 $\mu$m or greater and 500 $\mu$m or less.

[Figure 1]

[Figure 2]

## INTERNATIONAL SEARCH REPORT

| | International application No. |
|---|---|
| | **PCT/KR2024/013464** |

**A. CLASSIFICATION OF SUBJECT MATTER**

**H01M 4/38**(2006.01)i; **H01M 10/052**(2010.01)i; **H01M 4/62**(2006.01)i; **H01M 4/525**(2010.01)i; **H01M 4/505**(2010.01)i; **H01M 4/58**(2010.01)i; **H01M 4/134**(2010.01)i

According to International Patent Classification (IPC) or to both national classification and IPC

**B. FIELDS SEARCHED**

Minimum documentation searched (classification system followed by classification symbols)

H01M 4/38(2006.01); C01B 33/029(2006.01); H01M 10/052(2010.01); H01M 10/42(2006.01); H01M 4/02(2006.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 결정립(grain boundary), 실리콘 활물질 (silicon active material), 입경(particle size), 셀 스웰링(cell swelling), 셀 브리딩(cell breathing), 두께(thickness)

**C. DOCUMENTS CONSIDERED TO BE RELEVANT**

| Category* | Citation of document, with indication, where appropriate, of the relevant passages | Relevant to claim No. |
|---|---|---|
| X | KR 10-2010-0103791 A (SANYO ELECTRIC CO., LTD. et al.) 28 September 2010 (2010-09-28)<br>See claims 1, 2, 4 and 12-14; and paragraphs [0010], [0032], [0038]-[0043], [0045], [0057], [0058], [0061], [0063], [0066], [0067], [0072], [0077], [0107], [0108] and [0117]. | 1-12 |
| A | KR 10-2022-0034587 A (LG ENERGY SOLUTION, LTD.) 18 March 2022 (2022-03-18)<br>See abstract; and claims 1-10. | 1-12 |
| A | JP 2006-253126 A (MATSUSHITA ELECTRIC IND. CO., LTD.) 21 September 2006 (2006-09-21)<br>See abstract; and claims 1-5. | 1-12 |
| A | KR 10-2014-0056069 A (LG CHEM, LTD.) 09 May 2014 (2014-05-09)<br>See abstract; and claims 1-10. | 1-12 |
| A | KR 10-2023-0000615 A (HANSOL CHEMICAL CO., LTD.) 03 January 2023 (2023-01-03)<br>See abstract; and claims 1-6. | 1-12 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 December 2024** | **19 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2024/013464** |

| Patent document cited in search report | | | Publication date (day/month/year) | Patent family member(s) | | | Publication date (day/month/year) |
|---|---|---|---|---|---|---|---|
| KR | 10-2010-0103791 | A | 28 September 2010 | CN | 101919090 | A | 15 December 2010 |
| | | | | CN | 101919090 | B | 16 April 2014 |
| | | | | JP | 2013-229347 | A | 07 November 2013 |
| | | | | JP | 5338676 | B2 | 13 November 2013 |
| | | | | KR | 10-1522963 | B1 | 26 May 2015 |
| | | | | US | 2010-0266902 | A1 | 21 October 2010 |
| | | | | US | 8734991 | B2 | 27 May 2014 |
| | | | | WO | 2009-063801 | A1 | 22 May 2009 |
| KR | 10-2022-0034587 | A | 18 March 2022 | CN | 115336043 | A | 11 November 2022 |
| | | | | EP | 4106054 | A1 | 21 December 2022 |
| | | | | EP | 4106054 | A4 | 08 November 2023 |
| | | | | JP | 2023-520196 | A | 16 May 2023 |
| | | | | JP | 7371274 | B2 | 30 October 2023 |
| | | | | US | 11984587 | B2 | 14 May 2024 |
| | | | | US | 2023-0155118 | A1 | 18 May 2023 |
| | | | | WO | 2022-055309 | A1 | 17 March 2022 |
| JP | 2006-253126 | A | 21 September 2006 | JP | 5043344 | B2 | 10 October 2012 |
| KR | 10-2014-0056069 | A | 09 May 2014 | CN | 103931027 | A | 16 July 2014 |
| | | | | CN | 103931027 | B | 07 December 2016 |
| | | | | EP | 2897200 | A1 | 22 July 2015 |
| | | | | EP | 2897200 | A4 | 14 October 2015 |
| | | | | EP | 2897200 | B1 | 25 July 2018 |
| | | | | JP | 2015-520725 | A | 23 July 2015 |
| | | | | JP | 5927710 | B2 | 01 June 2016 |
| | | | | KR | 10-1591571 | B1 | 03 February 2016 |
| | | | | US | 2014-0141334 | A1 | 22 May 2014 |
| | | | | US | 9548493 | B2 | 17 January 2017 |
| | | | | WO | 2014-069902 | A1 | 08 May 2014 |
| KR | 10-2023-0000615 | A | 03 January 2023 | EP | 4362134 | A1 | 01 May 2024 |
| | | | | JP | 2024-524173 | A | 05 July 2024 |
| | | | | KR | 10-2688288 | B1 | 26 July 2024 |
| | | | | US | 2024-0282930 | A1 | 22 August 2024 |
| | | | | WO | 2022-270967 | A1 | 29 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119535
- KR 1020230119486

- JP 2009080971 A